Europäisches Patentamt

European Patent Office

Office européen des brevets

(11) Publication number: **0 194 130 B1**

# EUROPEAN PATENT SPECIFICATION

(45) Date of publication of patent specification: **19.06.91**　(51) Int. Cl.⁵: **G06F 13/42**, H04N 5/44

(21) Application number: **86301509.5**

(22) Date of filing: **04.03.86**

(54) Electronic apparatus control systems.

(30) Priority: **05.03.85 JP 43383/85**

(43) Date of publication of application:
**10.09.86 Bulletin 86/37**

(45) Publication of the grant of the patent:
**19.06.91 Bulletin 91/25**

(84) Designated Contracting States:
**AT DE FR GB NL**

(56) References cited:
**FR-A- 2 539 260**
**US-A- 4 338 632**

**ELECTRONICS INTERNATIONAL, vol. 54, no. 16, August 1981, pages 97-103, New York, US; T. FISCHER: "Digital VLSI breeds next-generation TV receivers"**

**ELECTRONIC ENGINEERING, vol. 56, no. 685, January 1984, pages 41-48, London, GB; T. DANBURY et al.: "Small area networks using serial data transfer. Part 1 - the I2C and CLIPS"**

(73) Proprietor: **SONY CORPORATION**
**7-35 Kitashinagawa 6-Chome Shinagawa-ku Tokyo 141(JP)**

(72) Inventor: **Mogi, Takao c/o Sony Corporation Patents Division 7-35 Kitashinagawa 6-chome Shinagawa-ku Tokyo(JP)**
Inventor: **Suematsu, Masayuki c/o Sony Corporation Patents Division 7-35 Kitashinagawa 6-chome Shinagawa-ku Tokyo(JP)**
Inventor: **Fujita, Kosuke c/o Sony Corporation Patents Division 7-35 Kitashinagawa 6-chome Shinagawa-ku Tokyo(JP)**

(74) Representative: **Cotter, Ivan John et al D. YOUNG & CO. 10 Staple Inn London WC1V 7RD(GB)**

## Description

This invention relates to electronic apparatus control systems.

Video and audio equipment, such as television (TV) receivers, video tape recorders (VTRs) and tape recorders, with digital control circuits, are becoming more popular. Most such digitally controlled equipment adopts an inner bus system. The inner bus system incorporates a central processing unit (CPU), an inner bus, a read only memory (ROM) and the like. Operation preset data for each circuit is stored in the ROM. In normal operation, the preset data is read out from the ROM by the CPU. The read out data is supplied to a predetermined circuit through the inner bus so as to allow the circuit to perform a predetermined operation. In such a system, each circuit also can be controlled through the CPU by external operation at a keyboard or a remote control unit. The inner bus used in such an inner bus system can use a communication scheme as disclosed in, for example, Japanese Patent Disclosure No. 57-106262. The bus line adopting this scheme is a two-wire bus line having a data line and a clock line.

In electronic equipment having the above-mentioned inner bus system, adjustment procedures in manufacture and maintenance can be standardised and simplified. Therefore, the total cost, including the manufacturing cost, is expected to decrease.

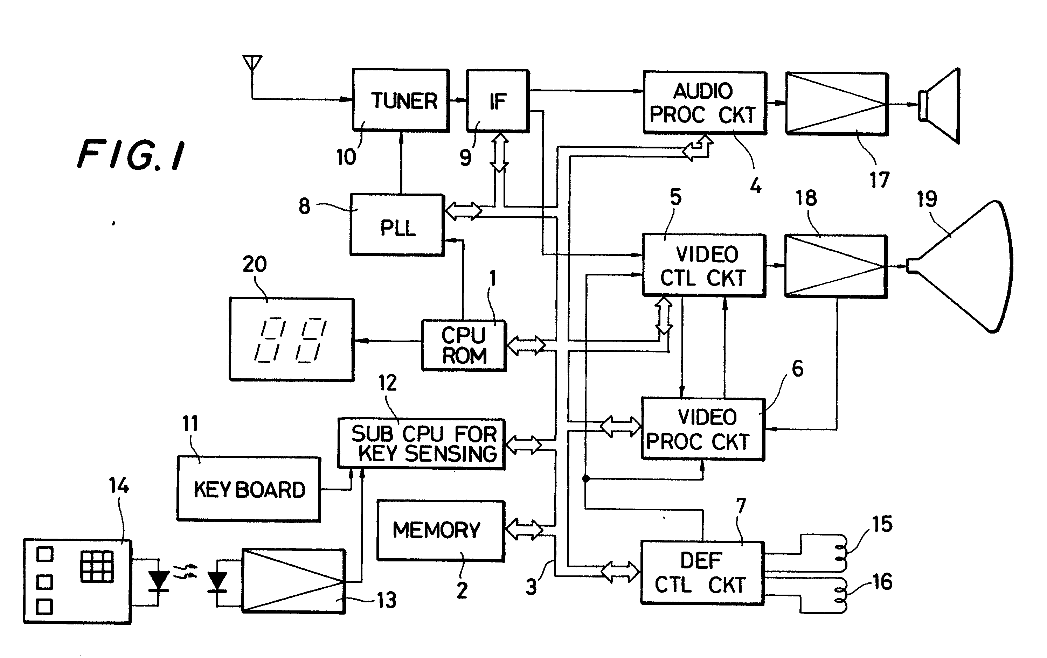

Figure 1 of the accompanying drawings shows the configuration of a TV receiver using the above-mentioned inner bus system to which the present invention is applicable.

The TV receiver shown in figure 1 has a main CPU 1, a memory 2, an inner bus line 3, and so forth. In this arrangement, controllable circuits include an audio processing circuit 4, a video control circuit 5, a video processing circuit 6, a deflection control circuit 7, a phase-locked loop (PLL) circuit 8, and an intermediate frequency circuit 9. When the TV receiver is operative and commands are supplied from a keyboard 11 or a remote control commander 14 to the main CPU 1 through a subsidiary (sub) CPU 12 for key sensing, the main CPU 1 controls the circuits 4 to 9 in response to the commands. Upon such control operation, tuning, volume adjustment, picture adjustment or the like is performed and the adjustment result is displayed on a display section 20. The main CPU 1 constantly checks the operational states of the circuits 4 to 9 so as to allow them to operate in a predetermined state.

The arrangement illustrated in Figure 1 also comprises a remote control signal receiving circuit 13, deflection coils 15 and 16, an audio output amplifier 17, a video output amplifier 18, and a cathode-ray tube 19.

In the operation of controlling the TV receiver or other video equipment, when control signals are supplied from the main CPU 1 to the respective controllable circuits 4 to 9, or when the circuits 4 to 9 transmit state signals to the main CPU 1, data representing the control or state contents is transmitted together with clock signals. When the clock frequency is increased, radio interference due to noise from the clock pulses appears on the screen of the cathode-ray tube 19. In order to avoid this, data transmission is performed only during a vertical blanking interval (hereinafter referred to as a "VBLK interval") of a video or television signal.

The inner bus system as described above is subject to the following problem.

The VBLK interval for data transmission has a time interval of 1.17 to 1.33 milliseconds. When data is transmitted in this interval using clock signals having a frequency of 100 kHz, 117 bits of data can be transmitted during one VBLK interval. Therefore, when 1 byte of data is transmitted together with a single acknowledgement bit, 13 bytes (117/9) of data can be transmitted.

In this manner, the amount of data which can be transmitted during one VBLK interval is limited and, accordingly, the number of communications which can be performed between the main CPU and the controllable circuits during one VBLK interval also is limited. When waiting time and the like is considered, in some cases the main CPU may not be able to check the operational states of all of the controllable circuits within a single VBLK interval. In such a case, the main CPU checks such circuits in the next VBLK interval. This results in a long response time. Such a long response time is undesirable in tuning, picture adjustment or the like by means of a keyboard or remote control commander.

According to the invention there is provided an electronic apparatus control system comprising:
control circuit means provided with a control program ROM,
circuit blocks to be controlled by the control circuit means, and
bus lines connected between the control circuit means and the circuit
blocks,
the control circuit means being operative to communicate data sequentially with the circuit blocks during predetermined intervals,
characterised in that the control circuit means is operative always to select a predetermined one or more of the circuit blocks for communication immediately after the start of each said predetermined interval or each $p^{th}$ said predetermined interval, where p is a predetermined integer greater than or equal to two, after which the control circuit means is operative to communicate data sequentially with the circuit blocks in accordance with a predetermined sequence of addresses of the respective circuit blocks, and is responsive to said predetermined address sequence not having ended at the end of one of the predetermined intervals to communicate with the circuit blocks during the following predetermined interval commencing with the block having the next address in the sequence.

If the electronic apparatus control is an apparatus for handling a television signal or signals, communication between the control circuit means and the controllable circuits or circuit blocks can be performed during vertical blanking intervals of the television signal.

The control circuit means and the controllable circuits or circuit blocks may be connected through a two-wire bus line.

A control system embodying the present invention may be used to control electronic apparatus which is a television receiver having an external input means for channel selection and operational control.

The invention will now be further described, by way of illustrative and non-limiting example, with reference to the accompanying drawings, in which:

Figure 1 is a block diagram of a television receiver with an inner bus system to which the present invention is applicable;

Figure 2 is a block diagram for explaining a mode of operation of a system embodying the present invention;

Figures 3A to 3C are timing charts for explaining signal transmission in a two-wire bus line system to which the present invention is applied;

Figures 4A and 4B are timing charts for explaining the mode of operation of an embodiment of the present invention; and

Figure 5 is a flow chart for explaining the mode of operation of the embodiment of the present invention.

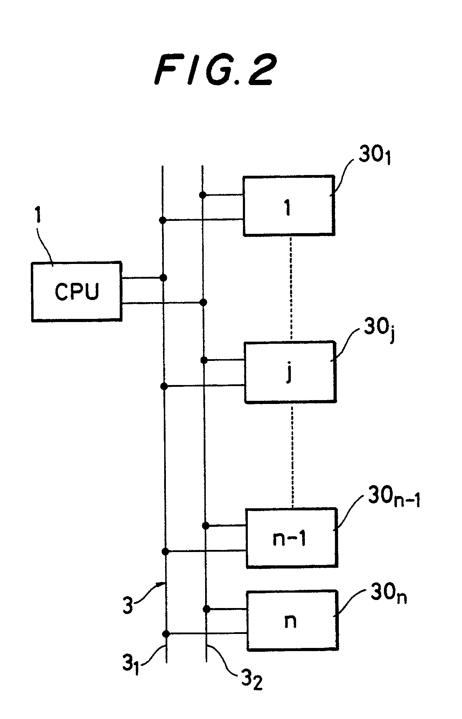

Referring to Figure 2, a control circuit 1 represented by a main CPU is connected to n controllable circuits $30_1$ to $30_n$ through a two-wire bus line 3. The bus line 3 consists of or includes a clock line $3_1$ and a data line $3_2$.

In the two-wire bus line as shown in Figure 2, clock signals and data are transmitted through the clock line $3_1$ and the data line $3_2$, respectively, at timings as shown in Figures 3A to 3C.

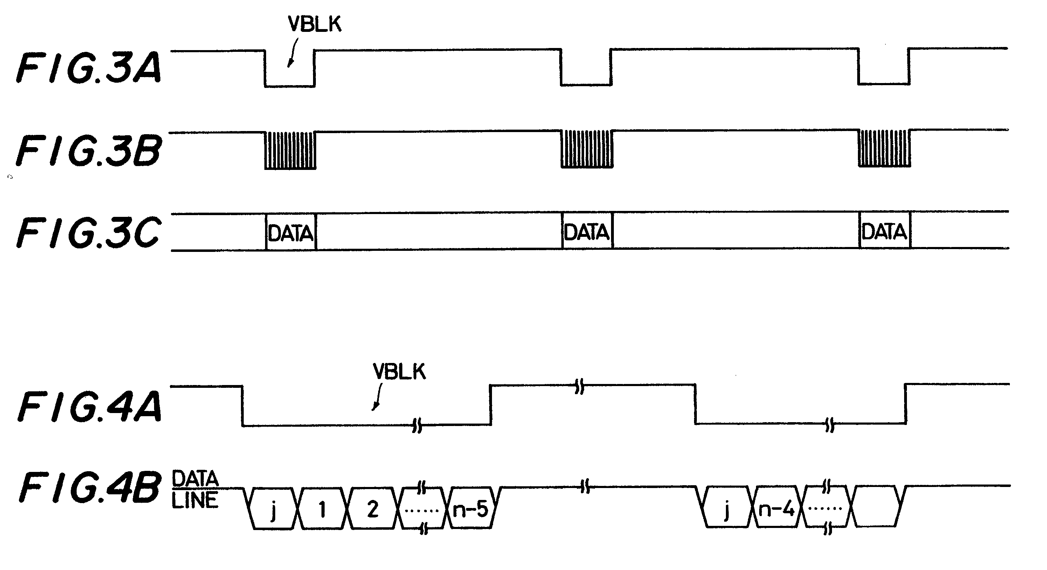

Each low level interval in Figure 3A is a VBLK interval. In this interval, clock signals are transmitted onto the clock line $3_1$ as shown in Figure 3B and data is transmitted onto the data line $3_2$ as shown in Figure 3C.

In this embodiment, control of a specific controllable circuit $30_j$ is performed at first when each VBLK interval starts. For this purpose, as shown in Figure 4B, in each VBLK interval (Figure 4A) an interval j for allowing communication with the circuit $30_j$ is provided. Communication intervals 1 to n for other circuits $30_1$ to $30_n$ excluding the circuit $30_j$ are accommodated within two VBLK intervals if the communication cycle cannot be terminated within a single VBLK interval. The intervals 1 to n can be accommodated within three or more VBLK intervals, as needed.

A specific controllable circuit which is controlled at first in each VBLK interval need not be a single circuit $30_j$, but can be two or more circuits. In that case, a corresponding number of communication intervals is included in each VBLK interval. In addition, communication with a specific controllable circuit need not be performed within each VBLK interval, but can be performed at every other VBLK interval or at every predetermined number of VBLK intervals.

A circuit which requires a particularly fast response is selected as the specific controllable circuit $30_j$. In the case of the television receiver shown in Figure 1, a best effect is obtained if control is performed with priority in response to requests from the keyboard 11, the commander 14, and the like.

When a plurality of specific controllable circuits is selected in the TV receiver shown in Figure 1, then, for example, the PLL circuit 8, the IF circuit 9, the video control circuit 5, the video processing circuit 6, the keyboard 11, and a character display control circuit (not shown) can be selected.

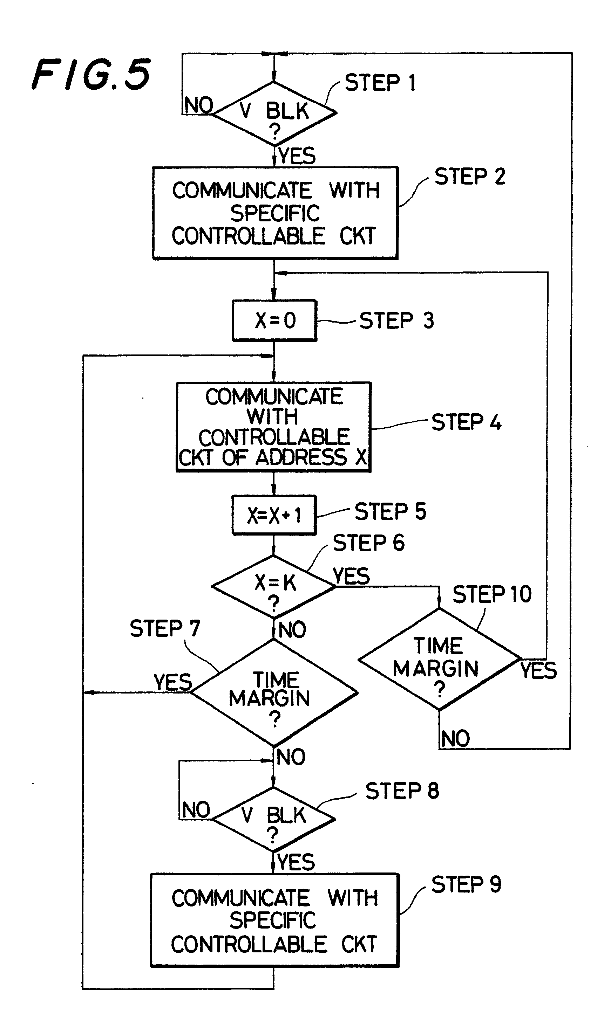

Figure 5 is a flow chart of communication between the control circuit and the controllable circuits.

In a step 1, a check is made to determine if a VBLK interval has been reached. If the answer to the check made in the step 1 is YES, communication with the specific circuit $30_j$ is performed in a step 2. After communication with the circuit $30_j$, an address parameter X is initialised to zero in a step 3, and communication with the controllable circuit 30 corresponding to the address X is performed in a step 4. After communication is terminated, the address parameter X is increased by one in a step 5, and a check is made in a step 6 to determine if the address parameter X has reached a predetermined value K. If it is determined that the address parameter X has reached the predetermined value K, this means the end of the communication cycle. Therefore, when it is determined that the address parameter X has reached the predetermined value K, a check is made in a step 10 to determine if there is a time margin for further communication. If there is no time margin, the operational flow returns to the step 1 and the next VBLK interval is awaited. If there is a time margin, the operational flow returns to the step 3. In the step 3, the address parameter X is again initialised, and the operational flow advances to the step 4. If it is determined in the step 6 that the address parameter X has not reached the predetermined value K, a check is made in a step 7 to determine if there is a time margin. If the answer to the check performed in the step 7 is YES, the operational flow returns to the step 4.

If the answer to the check performed in the step 7 is NO, the next VBLK interval is awaited (step 8). When the next VBLK interval is reached, communication with the specific controllable circuit $30_j$ is performed (step 9) and the operational flow then returns to the step 4.

In summary, according to the above-described embodiment of the present invention, in video equipment such as TV receivers, VTRs or the like with an inner bus line system, a circuit which requires a particularly fast response is controlled or checked with priority over other circuits. Therefore, efficient communication can be achieved even if communication is performed only during vertical blanking intervals.

## Claims

1. An electronic apparatus control system comprising:

   control circuit means (1) provided with a control program ROM,

   circuit blocks ($30_1$ to $30_n$) to be controlled by the control circuit means (1), and

   bus lines (3) connected between the control circuit means (1) and the circuit blocks ($30_1$ to $30_n$),

   the control circuit means (1) being operative to communicate data sequentially with the circuit blocks ($30_1$ to $30_n$) during predetermined intervals,

   characterised in that the control circuit means (1) is operative always to select a predetermined one or more of the circuit blocks (e.g. $30_j$) for communication immediately after the start of each said predetermined interval or each $p^{th}$ said predetermined interval, where p is a predetermined integer greater than or equal to two, after which the control circuit means (1) is operative to communicate data sequentially with the circuit blocks ($30_1$ to $30_n$) in accordance with a predetermined sequence of addresses of the respective circuit blocks, and is responsive to said predetermined address sequence not having ended at the end of one of the predetermined intervals to communicate with the circuit blocks during the following predetermined interval commencing with the block having the next address in the sequence.

2. An electronic apparatus control system according to claim 1, for controlling electronic apparatus that can handle a television signal, wherein said predetermined intervals are vertical blanking intervals of the television signal.

3. An electronic apparatus control system according to claim 2, wherein the bus lines (3) include a clock line ($3_1$) and a data line ($3_2$).

4. An electronic apparatus control system according to claim 3, which is operative to control electronic apparatus which is a television receiver and is equipped with external input means (11,14) for channel selection and so on.

## Revendications

1. Système de commande pour dispositif électronique comprenant :
   - des circuits de commande (1) disposés avec une mémoire ROM contenant des programmes de commande,
   - des blocs de circuits ($30_1$ à $30_n$) à commander par les circuits de commande (1), et
   - des lignes de bus (3) connectées entre les circuits de commande (3) et les blocs de circuits ($30_1$ à $30_n$),
   - les circuits de commande (1) étant mis en fonctionnement de façon à échanger des données séquentiellement avec les blocs de circuits ($30_1$ à $30_n$), pendant des intervalles prédéterminés,

   caractérisé en ce que les circuits de commande (1) sont mis en fonctionnement toujours de façon à sélectionner au moins un des blocs de circuits (par exemple $30_j$ dans le but d'initier une communication immédiatement après le démarrage de chacun des dits intervalles prédéterminés ou après chaque p-ième dit intervalle prédéterminé, où p est un entier prédéterminé plus grand ou égal à 2, après quoi les circuits de commande (1) sont mis en fonctionnement pour transmettre des données séquentiellement avec les blocs de circuits ($30_1$ à $30_n$) selon une séquence prédéterminée d'adresses de blocs de circuits respectifs, et détectent la dite séquence d'adresse prédéterminée qui n'a pas été finie à la fin de l'un des dits intervalles prédéterminés pour communiquer avec les blocs de circuits pendant l'intervalle prédéterminé suivant commençant avec le bloc présentant l'adresse suivante dans la séquence.

2. Système de commande pour dispositif électronique selon la revendication 1, pour commander un appareil électronique qui peut traiter un signal de télévision, dans lequel les dits intervalles prédéterminés sont des intervalles de suppression de trame du signal de télévision.

3. Système de commande pour dispositif électronique selon la revendication 2, dans lequel les lignes de bus (3) comprennent une ligne d'horloge ($3_1$) et une ligne de données ($3_2$).

4. Système de commande pour dispositif électronique selon la revendication 3, qui est activé de façon à commander un appareil électronique de commande qui est un récepteur de télévision et qui est équipé avec des moyens de saisie de données externes (11, 14) pour sélection de canal, etc.

**Ansprüche**

1. Steuersystem für elektronische Einrichtungen mit:
einer ein Steuerprogramm ROM aufweisenden Steuerschaltungseinrichtung (1),
Schaltungsblöcken ($30_1$ bis $30_n$), die mittels der Steuerschaltungseinrichtung (1) zu steuern sind, und
Busleitungen (3), die die Steuerschaltungseinrichtung (1) und die Schaltungsblöcke ($30_1$ bis $30_n$) miteinander verbinden,
wobei die Steuerschaltungseinrichtung (1) in Funktion während vorbestimmter Intervalle Daten aufeinanderfolgend mit den Schaltungsblöcken ($30_1$ bis $30_n$) austauscht,
dadurch **gekennzeichnet,**
daß die Steuerschaltungseinrichtung (1) in Funktion ständig einen vorbestimmten oder mehrere der Schaltungsblöcke (z.B. $30_j$) zwecks Datenaustausch unmittelbar nach Beginn jedes vorbestimmten Intervalls oder jedes p-ten vorbestimmten Intervalls auswählt, wobei p eine vorbestimmte ganze Zahl größer als oder gleich zwei ist, wonach die Steuerschaltungseinrichtung (1) in Funktion gemäß einer vorbestimmten Sequenz von Adressen der jeweiligen Schaltungsblöcke Daten aufeinanderfolgend mit den Schaltungsblöcken ($30_1$ bis $30_n$) austauscht und auf die am Ende eines der vorbestimmten Intervalle nicht beendete, vorbestimmte Adressensequenz anspricht, um mit den Schaltungsblöcken während des nachfolgenden vorbestimmten Intervalls, das mit dem die nächste Adresse in der Sequenz aufweisenden Block beginnt, Daten auszutauschen.

2. Steuersystem für elektronische Einrichtungen nach Anspruch 1, zum Steuern von elektronischen Einrichtungen, die ein Fernsehsignal verarbeiten können wobei die vorbestimmten Intervalle vertikale Austastintervalle des Fernsehsignals sind.

3. Steuersystem für elektronische Einrichtungen nach Anspruch 2, in welchem die Busleitungen (3) eine Taktsignalleitung ($3_1$) und eine Datenleitung ($3_2$) umfassen.

4. Steuersystem für elektronische Einrichtungen nach Anspruch 3, das in Funktion eine elektronische Einrichtung steuert, die ein Fernsehempfänger und mit einer externen Eingabeeinrichtung (11,14) zur Kanalwahl usw. ausgerüstet ist.

FIG.1

EP 0 194 130 B1

# FIG.2

FIG.3A

VBLK

FIG.3B

FIG.3C    DATA           DATA           DATA

FIG.4A    VBLK

FIG.4B  DATA
        LINE   j   1   2   ......  n-5          j   n-4  ......

EP 0 194 130 B1

FIG.5